# EUROPEAN PATENT APPLICATION

(11) **EP 4 563 863 A1**
(43) Date of publication of application: **04.06.2025**
(21) Application number: 24213950.9
(22) Date of filing: 19.11.2024
(51) Int. Cl.: F16L 3/10

(54) **MODULAR RETENTION CLIP**

(30) Priority: 20.11.2023 US 202363600733 P
(71) Applicant: Cooper-Standard Automotive Inc., Northville, MI 48168 (US)
(72) Inventor: LEE, Chad, Northville 48168 (US); JENSEN, Jacob C., Northville 48168 (US); KEPHART, Jerry, Northville 48168 (US)
(74) Representative: Taylor, Gail

(57) **Abstract**

A modular retention clip for retaining elongated articles to a structure includes a clamping body (10) having first and second body portions (16, 18) of a first rigid material positionable between an open position and an engaged position. Isolation portions (12) of a second resilient material are attached to the first and second body portions that contact and retain the elongated articles in the engaged position. A living hinge (30) integrally connects the first and the second body portions and a latching member (36) is arranged to be captured within a receiving cavity (38) retaining the first and second body portions together. At least one mounting pin (50, 52) extends from the second body portion. A bracket (60) having a receiving portion (62) and a mounting portion (64) has at least one hole (61, 68) in the receiving portion that accepts the mounting pin to fix the clamping body to the bracket. The bracket mounting portion attaches the bracket to the structure.

## Description

### CROSS-REFERENCE TO RELATED APPLICATION AND PRIORITY CLAIM

This application claims priority under 35 U.S.C. § 119(e) to U.S. Provisional Patent Application No. 63/600,733 filed on November 20, 2023. This provisional application is hereby incorporated by reference in its entirety.

### TECHNICAL FIELD

This disclosure is generally directed to retention clips for mounting cables, wires, tubes, or pipes to a support structure, such as a vehicle body.

### BACKGROUND

Various retention clips have been devised to mount elongated parts, such as a fuel or brake line, accelerator cable, wire harness, to a vehicle frame at prescribed structural locations. The retention clips which are unitary members typically include two portions, one being a body portion for receiving and retaining the article to be held and the other a bracket portion used to mount the retention clip to the vehicle body. The body portion of such retention clips use pivotal covers which lock over an article inserted into the article holder or snap type arms which automatically hold an article on the retention clip after insertion past the arms. The arms bend apart on insertion and then snap back to engage a small width or diameter portion of the article and forcibly hold the article. The body portion of the retention clips can also employ vibration absorbing material or vibration blocking features to isolate vibrations in the pipes, tubes, or harnesses from being coupled to the bracket portion and inducing unwanted noise to the vehicle frame. The vibration absorbing feature is typically provided by vibration absorbing materials mounted in the body portion of the retention clip. The vibration damping materials are typically formed as a separate part conforming to the body portion of the retention clip and then inserted into the body portion. This increases part count and overall retention clip cost due to the added assembly steps and assembly time. In other known retention clips the vibration absorbing material is injection molded in a second process or "shot" of a two-shot process to complete the formation of the vibration damping material of the retention clip. Since retention clips are manufactured using various bracket configurations, a two-shot process that manufactures a retention clip consisting of a retention body and a bracket requires many different molding steps to complete different configurations of retention clips. The two-shot method also becomes costly to manufacture due to the requirement to mold retention clips with integral brackets of various configurations.

It would therefore be desirable to provide a retention clip for mounting elongated articles such as tubes, pipes, cables, and wires to a vehicle frame which effectively dampens vibrations in such parts and can be efficiently manufactured at a low cost.

### SUMMARY

This disclosure relates to retention clips for mounting elongated articles to a support structure, such as a vehicle body .

In a first embodiment, a retention clip is disclosed comprising a clamping body having a first body portion rotatably mounted to a second body portion. First and second isolation portions are attached to respective first and second body portions, wherein rotation of the first body portion over the second body portion causes the first isolation portion to rotate over the second isolation portion. At least a first mounting pin extends from a mounting surface of the second body portion. The first mounting pin is arranged to be accepted in a first hole in a bracket and the mounting pin physically altered to fix the clamping body to the bracket.

In a second embodiment, a modular retention apparatus for retaining elongated articles to a structure is disclosed comprising, a clamping body having first and second body portions comprised of a rigid material. The first and second body portions positionable between an open position and an engaged position. Isolation portions comprised of a resilient material are attached to each of the first and second body portions. The isolation portions frictionally contact and retain the elongated articles in the engaged position. At least one mounting pin extends from a mounting surface of the second body portion. A bracket having a receiving portion with at least one hole receives the mounting pin to fix the clamping body to the bracket and a bracket mounting portion attaches the bracket to the structure.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIG. 1 is a front perspective view of the clamping body in an open position in accordance with the present disclosure;
FIG. 2 is a front perspective view of the clamping body in an engaged position in accordance with the present disclosure;
FIG. 3A is a perspective view of a first side of an exemplary assembled retention clip in accordance with the present disclosure;
FIG. 3B is a perspective view of a second side of the exemplary assembled retention clip of FIG. 3A;
FIG. 4A is a perspective view of a first side of an exemplary bracket used with the clamping body in accordance with the present disclosure;
FIG. 4B is a perspective view of the second side of the bracket of FIG. 4A;
FIG. 5A is a perspective view of a first side of another exemplary bracket used with the clamping body in accordance with the present disclosure;
FIG. 5B is a perspective view of a second side of the bracket of FIG. 5A;
FIG. 6A is a perspective view of a first side of another exemplary bracket used with the clamping body in accordance with the present disclosure; and
FIG. 6B is a perspective view of a second side of the bracket of FIG. 6A.

### DETAILED DESCRIPTION

The figures discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

The present disclosure is a modular retention clip consisting of a clamping body for mounting elongated articles, such as wires, harnesses, pipes, tubes, etc., that is mountable to different brackets and that can be used in an automotive application. The assembly of the clamping body to a bracket forms a modular retention clip that can be fastened to a vehicle frame.

The clamping body includes first and second body portions both created of a first rigid polymeric material. The body portions, when angularly rotated apart with respect to each other define an open position, and when rotated into direct contact with each other define an engaged position. An isolation portion is created of a resilient second polymeric material. The isolation portion includes isolation members individually connected to each of the first and second body portions. The isolation members are positioned facing each other when the retention clip is in the engaged position. The isolation members frictionally contact and thereby retain the elongated articles in the engaged position. A living hinge integrally connects the body portions together, allowing the body portions to rotate with respect to each other. The living hinge provides the only connection between the first and second body portions as the body portions transition between the open position and the engaged position. A latching member elastically and integrally molded on the first body portion deflects to be captured within a latch receiving cavity created in the second body portion that captures and retains the first and second body portions together. The clamping body further includes a pair of mounting members extending from a surface of the second body portion of the clamping body. Each mounting member is arranged to be placed within a respective hole formed through a mounting bracket. Each mounting member is deformable using heat and a tool to form a retention head that fixes the clamping body to the bracket. The bracket may be manufactured in various arrangements and forms. All the brackets are arranged to accept the clamping body to form the modular retention clip.

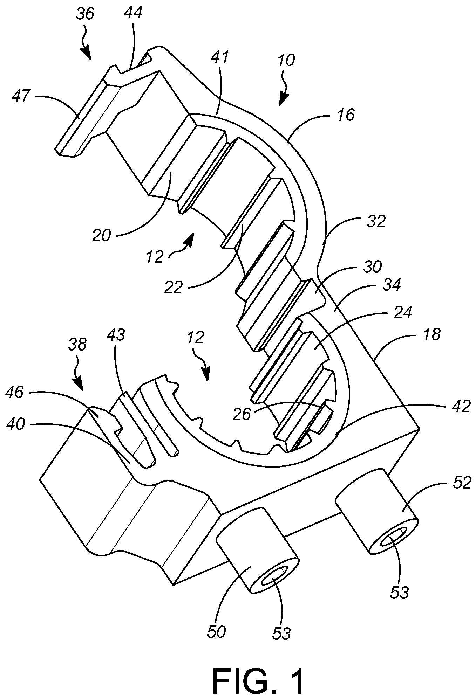

Referring to FIG. 1, an exemplary modular retention clip of the present disclosure is shown. The retention clip includes a clamping body 10 composed of a polymeric first material such as a polyamide material, or a polyoxymethylene material, or other similar thermoplastic material having a stiffness necessary to retain the shape of the retention clip when the clip is engaged with one or more elongated articles (not shown). The clamping body 10 is made in a first injection molding process or "shot" in a mold cavity (not shown). The clamping body 10 can further include an isolation portion 12 which is made of a resilient second material such as for example a thermoplastic elastomer. The isolation portion 12 is injection molded in a second process or in a two-shot process to complete the formation of the clamping body 10. The materials of clamping body 10 and isolation portion 12 are fixedly joined while the materials are at an elevated temperature in the mold such as by a chemical bond acting to join the isolation portion 12 to clamping body 10.

Clamping body 10 includes a first body portion 16 which is rotatably connected to a second body portion 18. Material of the isolation portion 12 when injected in the second molding shot flows onto first body portion 16 to create a first isolation member 20 having a plurality of resilient ribs 22 extending from a clamping surface and a second isolation member 24 having a plurality of resilient ribs 26 extending from a complementary clamping surface.

A living hinge 30 flexibly connects the second body portion 18 to the first body portion 16. Living hinge 30 is integrally and homogeneously made of the material of the clamping body 10 and created during injection molding of the first and second portions 16 and 18. The material of living hinge 30 extends between an exterior surface 32 of portion 16 to an exterior surface 34 of portion 18.

The first and second body portions 16, 18 are molded following the first molding shot having portions 16, 18 integrally connected to living hinge 30. In the subsequent second molding shot, the material of isolation portion 12 flows to the first body portion 16 toward an arc-shaped surface 41 and to a similar arc-shaped surface 42 of the second body portion 18.

The first body portion 16 of clamping body 10 further includes a latching member 36 which elastically deflects to be engaged within a latch receiving cavity 38 created in the second body portion 18 to assist in coupling the first and second body portions 16, 18 together. The latching member 36 includes a flexible arm 44 extending from the material of the first body portion 16 towards the receiving cavity 38. The receiving cavity 38 is formed between a rigid wall 40 extending from material of the second body portion 18 and a deflecting arm 43 that elastically deflects toward rigid wall 40. As arm 44 of latching member 36 is received in the latch receiving cavity 38 a tooth 47 extending from arm 44 engages a complementary tooth 46 extending into receiving cavity 38 from wall 40 after the arm 44 extends through the receiving cavity 38. Deflecting arm 43 applies a force against arm 44 when tooth 46 couples to tooth 47 that resists the release of arm 44 from receiving cavity 38.

First and second mounting pins 50 and 52 extend from the bottom surface of the second body 18. The mounting pins 50, 52 are cylindrical in cross section and each have a cavity 53 extending partially through the mounting pins 50 and 52. Each mounting pin 50, 52 is offset axially from the other in order to maximize the distance between the pins which aids in the stability of the mounting arrangement and the retention of clamping member to a bracket. The mounting pins 50, 52 are arranged to fit within complementary holes in a bracket and fixed to the bracket using a heat staking process which will be explained in more detail below. The clamping body 10 is molded using the two-shot molding process in the open position shown in FIG. 1

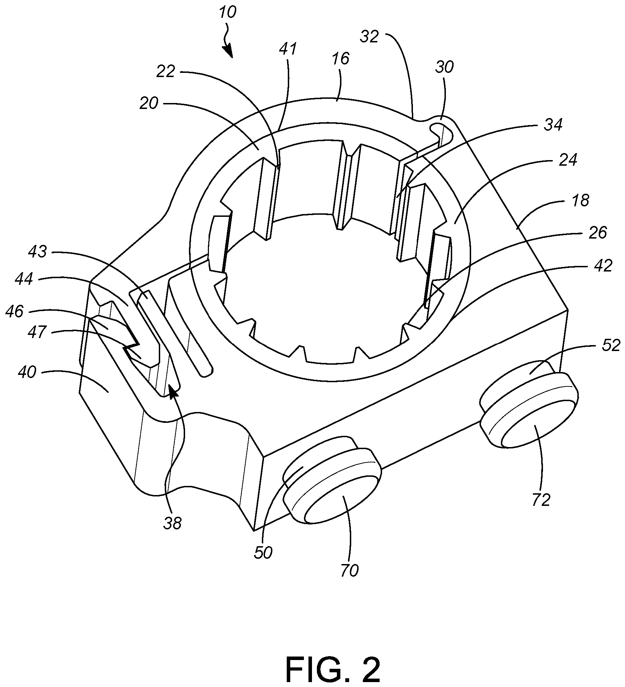

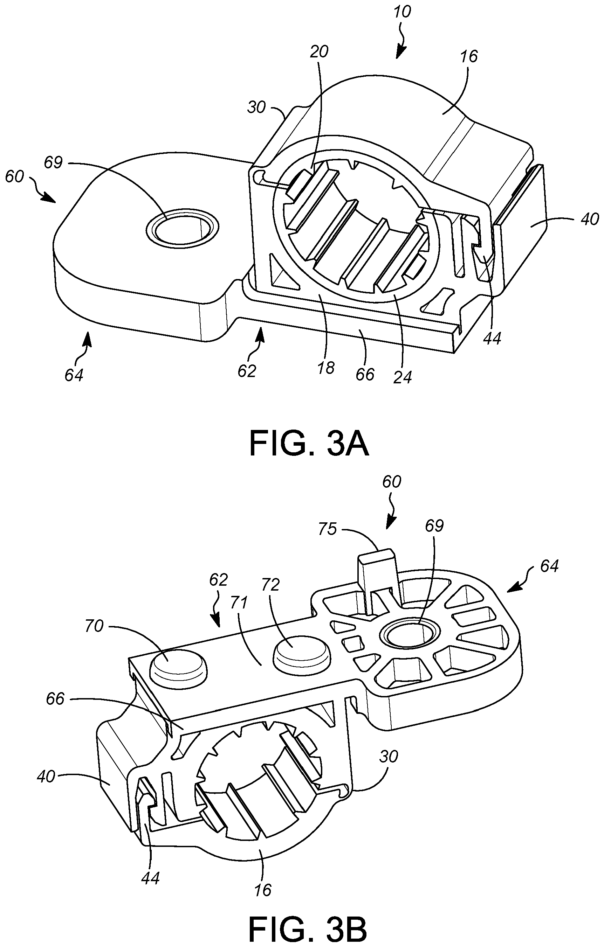

Referring to FIG. 2 and to FIGS. 3A-3B, the first body portion 16 is shown in an engaged with the second body portion 18. The body portions 16 and 18 are engaged preferably before but also optionally after receipt of elongated articles within isolation portion 12 such as wires, harnesses, pipes, tubes, (not shown) and prior to the clamping body 10 being fixed to a bracket 60. The mounting of the clamping body 10 to a bracket 60 will be shown in greater detail with reference to FIGS. 3A-3B. The elongated articles are placed between isolation members 20 and 24 and rested on either isolation member 20 or 24 based on the orientation of the clamping body 10.

The first body portion 16 is then rotated from the as molded or open position shown with respect to FIG. 1 toward the closed or engaged position shown in FIG. 2. The axis of rotation is defined by a closing arc defined by the living hinge 30. During this portion of rotation of the first body portion 16, the living hinge 30 provides the only physical connection between the second body portion 18 and first body portion 16. The freely deflectable material of living hinge 30 provides an elastic biasing force that acts to align and bring the first body portion 16 over the second body portion 18 and the elongated articles contained between isolation members 20 and 24. The resilient ribs 22, 26 of the first and second isolation members 20, 24 elastically compress, or bend as the elongated articles are received on the isolation members. The second body portion 18 is coupled to the first body portion 16 by arm 44 of latching member 36, when arm 44 is received in cavity 38 and locked together by the engagement of tooth 47 with tooth 46.

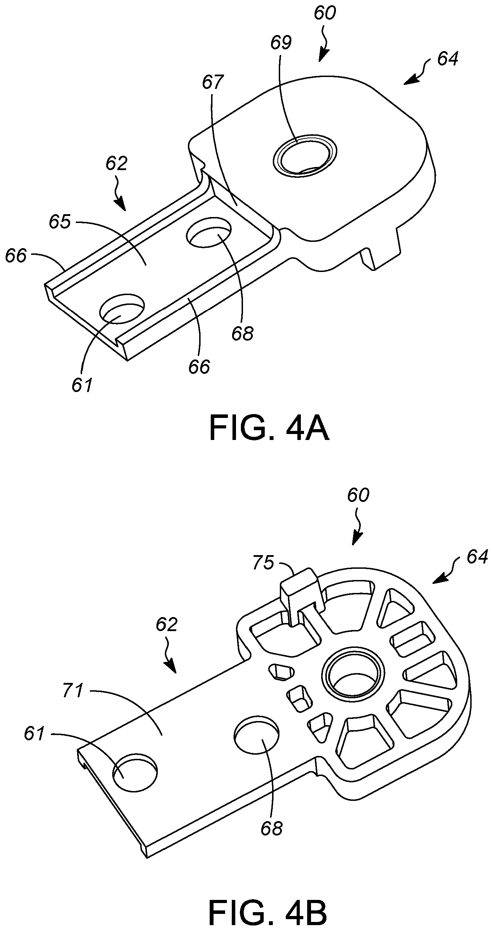

FIGS. 3A and 3B show the clamping body 10 in the engaged position fixed to an exemplary mounting bracket 60. FIGS 4A and 4B show the exemplary mounting bracket 60 without the clamping body 10 fixed to the mounting bracket 60. With reference to FIGS 4A and 4B, as well as FIG 3A and 3B the exemplary features of a bracket 60 used in forming a modular retention clip will be explained. The bracket 60 is comprised of a clamping body receiving portion 62 and a mounting portion 64 joined in an axial orientation to the other. FIG. 4A illustrates a first side of the bracket 60 while FIG 4B illustrates a second side of the bracket 60 opposite from the first side. The clamping body receiving portion 62 is formed on the first side of bracket 60 by a planar mounting surface 65 bordered by a pair of walls 66 located on a perimeter edge of mounting surface 65 with each wall 66 directly opposite from the other. The mounting portion 64 of bracket 60 comprises a raised platform extending from mounting surface 65 from a perimeter wall 67 extending vertically from a third perimeter edge of mounting surface 65.

Mounting portion 64 includes a centrally located mounting hole 69 extending through the platform from the first side of the mounting bracket 60 to the second side. The mounting surface 65 further includes first and second holes 61 and 68 that extend through mounting surface 65 on the first side of bracket 60 to a surface 71 on the second side of bracket 60. The holes 61 and 68 are sized and located on mounting surface 65 to accept therethrough the mounting pins 50, 52 of the clamping body 10. As can be easily seen, the mounting holes 61 and 68 are axially offset on the mounting surface 65 to match the offset arrangement of mounting pins 50 and 52 of the clamping body 10.

As shown in FIG. 3A the clamping body 10 is installed on mounting surface 65 between the perimeter walls 66 and 67 with an individual mounting pin 50, 52 inserted into a complementary hole 61, 68, respectively. Walls 66 and 67 act as a rim to contain the second body portion 18 between the walls 66 and 67. It should be noted that FIG. 3A illustrates the mounting of the clamping body in the engaged position, it will be appreciated that the clamping body 10 can also be installed to the bracket 60 in the as-molded or open position and rotated into the engaged position after mounting of the clamping body 10 to the bracket 60.

The clamping body 10 is fixed to the bracket 60 by applying heat from a heat source to pins 50 and 52 from the second side of the bracket 60 to soften the polymeric material of the mounting pins 50, 52. A portion of each pin 50, 52 extending beyond surface 71, when in the softened state, is formed into a domed cap 70, 72 using a concave die tool (not shown). The mounting pins 50, 52 are pressed down against a surface 71 of the second side of bracket 60 to form the domed caps 70, 72 against surface 71. Once cooled, the domed caps 70, 72 fix and retain the clamping body 10 to bracket 60 as shown in FIG 3B. The completed retention clip can then be fastened to a vehicle frame or other structure by using a fastener (not shown) introduced into mounting hole 69 that is accepted by an associated fastener receiver on the vehicle frame. The second side of bracket 60 may also include a key member 75 that fits within an associated recess in the vehicle frame to properly locate the bracket 60 on the vehicle frame and aid in fastening of the bracket 60.

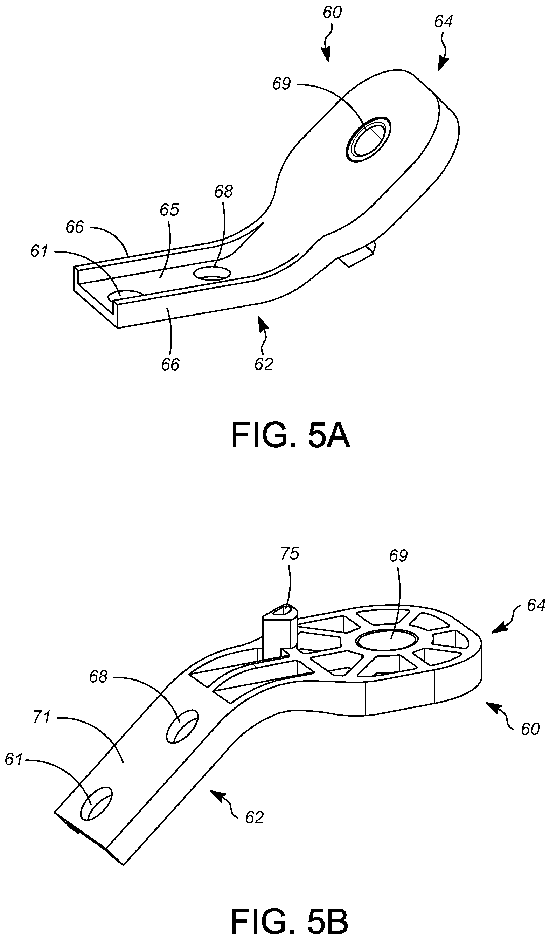

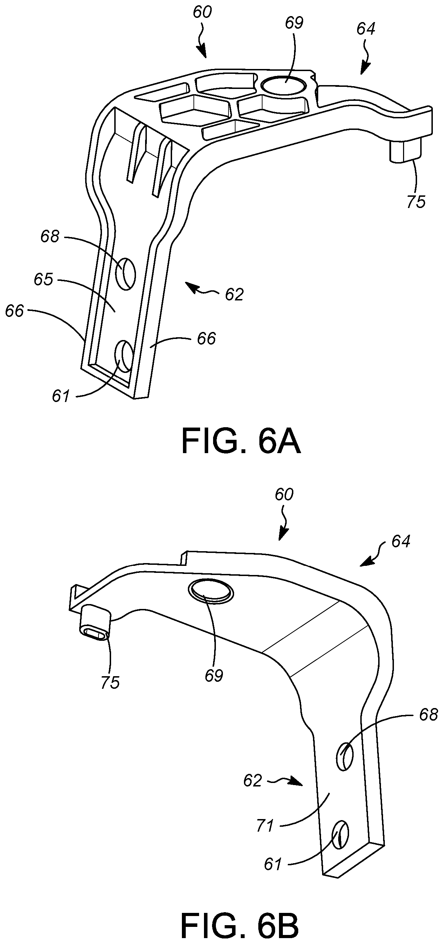

FIGS. 5A-5B and 6A-B illustrate examples of other forms of bracket 60 that can be used with clamping body 10 to form the modular retention clip of the present disclosure. It should be noted that all the brackets 60 illustrated in FIGS. 4A-4B, 5A-5B and 6A-6B can be molded from a polymeric material separately from the clamping body 10 or stamped from a suitable metal material. Each of the brackets 60 illustrated in FIGS. 5A-5B and 6A-6B comprise the same major components as illustrated and explained for the bracket 60 of FIGS. 4A-4B. FIGS. 5A and 6A illustrates the first side of the bracket 60 while FIGS. 5B and 6B illustrates the second side of the bracket 60 opposite from the first side. As can be seen in FIGS. 5A-5B the bracket 60 in this exemplary bracket discloses a configuration that has a mounting portion 64 located at an angular orientation of 45 degrees from the receiving potion 62. In FIGS. 6A-6B the mounting portion 64 is located 90 degrees from the receiving portion 62.

In all the mounting brackets 60 illustrated in FIGS. 4A-4B, 5A-5B and 6A-6B the elements required to mount the clamping body 10 to each bracket 60 have common mounting features including the planar mounting surface 65, second surface 71, walls 66 and holes 61 and 68. The common mounting features providing a modularity wherein a clamping body 10 can be assembled on a various types and configuration of brackets 60 to form the modular retention clip.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," or "controller" within a claim is understood and intended to refer to structures known to those skilled in the relevant art, as further modified or enhanced by the features of the claims themselves and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

The present application also discloses the following numbered embodiments:
Numbered embodiment 1
   A retention clip, comprising:
   a clamping body having a first body portion rotatably mounted to a second body portion;
   first and second isolation portions attached to a respective first and second body portion, wherein rotation of the first body portion over the second body portion causes the first isolation portion to rotate over the second isolation portion; and
   at least a first mounting pin extending from a mounting surface of the second body portion, the mounting pin arranged to be accepted in a first hole in a bracket, wherein the first mounting pin is arranged to be physically altered to fix the clamping body to the bracket.
Numbered embodiment 2
   The retention clip of Embodiment 1, wherein a living hinge integrally connects an exterior surface of the first body portion to an exterior surface of the second body portion, the living hinge allowing rotation of the first body portion over the second body portion.
Numbered embodiment 3
   The retention clip of Embodiment 2, wherein the first and the second body portion and the living hinge are composed of a rigid material.
Numbered embodiment 4
   The retention clip of Embodiment 2, wherein the first body portion includes a latching member located on the first body portion on a side opposite from the living hinge and the second body portion includes a latching member receiving cavity in alignment with the latching member, wherein upon rotation of the first body member over the second body member the latching member is captured in the latching member receiving cavity retaining the first body member to the second body member.
Numbered embodiment 5
   The retention clip of Embodiment 4, wherein the latching member includes a first tooth and the latching member receiving cavity includes a second tooth, the first tooth engaging the second tooth locking the first member to the second member.
Numbered embodiment 6
   The retention clip of Embodiment 5, wherein the latching member receiving cavity includes a deflecting arm that is arranged to apply a force against the first and the second tooth when they are engaged to resist their release.
Numbered embodiment 7
   The retention clip of Embodiment 2, wherein first body portion and the second body portion each include arc-shaped surfaces and each first and second isolation portions are attached to a respective first and second body portion arc-shaped surface.
Numbered embodiment 8
   The retention clip of Embodiment 7, wherein the first and second isolation portions are composed of a resilient material arranged to cradle and retain elongated articles between the first and second isolation portions when the first body portion is rotated over the second body portion and each first and second isolation portions include a plurality of ribs extending from a clamping surface, wherein each of the plurality of ribs compresses against the elongated articles.
Numbered embodiment 9
   The retention clip of Embodiment 1, wherein the second body portion includes a second mounting pin extending from the mounting surface that is offset axially from the first mounting pin.
Numbered embodiment 10
   The retention clip of Embodiment 9, wherein the bracket includes a receiving portion that includes the first and a second hole the second hole offset axially from the first hole and each of the first and second holes arranged to accept a respective first and second mounting pin therethrough, wherein each first and second mounting pin is physically altered to fix the clamping body to the bracket.
Numbered embodiment 11
   The retention clip of Embodiment 10, wherein the bracket further includes a mounting portion having a mounting hole arranged to accept a fastening device therethrough and attach the bracket with the clamping body to a structure.
Numbered embodiment 12
   The retention clip of Embodiment 10, wherein the first and second mounting pins are physically altered by applying heat from a heat source to the first and the second pins to soften the material comprising the first and second pins and forming a domed cap from the softened material of the first and second pin against the bracket using a tool.
Numbered embodiment 13
   A modular retention apparatus for retaining elongated articles to a structure, comprising:
   a clamping body having first and second body portions comprised of a rigid material,
   the first and second body portions positionable between an open position and an engaged position;
   isolation portions comprised of a resilient material attached to each of the first and second body portions the isolation portions frictionally contacting and retaining the elongated articles in the engaged position;
   at least a first mounting pin extending from a mounting surface of the second body portion; and
   a bracket having a receiving portion with at least one hole arranged to receive the first mounting pin therethrough to fix the clamping body to the bracket, and a mounting portion for attaching the bracket to the structure.
Numbered embodiment 14
   The modular retention apparatus of Embodiment 13, wherein a living hinge integrally connects an exterior surface of the first body portion to an exterior surface of the second body portion, the living hinge arranged to allow the first body portion to rotate with respect to the second body portion from the open position to the engaged position.
Numbered embodiment 15
   The modular retention apparatus of Embodiment 14, wherein the living hinge is comprised of the rigid material of the first and second body portions.
Numbered embodiment 16
   The modular retention apparatus of Embodiment 14, wherein the first body portion includes a latching member located on the first body portion on a side opposite from the living hinge and the second body portion includes a latching member receiving cavity in alignment with the latching member, wherein upon rotation of the first body member to the engaged position the latching member is captured in the latching member receiving cavity.
Numbered embodiment 17
   The modular retention apparatus of Embodiment 16, wherein the latching member includes a first tooth and the latching member receiving cavity includes a second tooth, the first tooth engaging the second tooth when the latching member is captured in the latching member receiving cavity locking the first body portion to the second body portion in the engaged position.
Numbered embodiment 18
   The modular retention apparatus of Embodiment 13, wherein each first and second isolation portions include a plurality of ribs extending from a clamping surface wherein each of the plurality of ribs compresses against the elongated articles in the engaged position.
Numbered embodiment 19
   The modular retention apparatus of Embodiment 13, wherein the second body portion includes a second mounting pin extending from the mounting surface the second mounting pin offset axially from the first mounting pin, and the bracket receiving portion further includes a second hole offset axially from the first hole and each first and second holes are arranged to accept a respective first and second mounting pin therethrough, wherein each first and second mounting pin is physically altered to fix the clamping body to the bracket.
Numbered embodiment 20
   The modular retention apparatus of Embodiment 19, wherein a bracket mounting portion is joined to the bracket receiving portion at an angular orientation to the mounting portion, and the bracket mounting portion includes a mounting hole arranged to accept a fastening device and attach the bracket with the clamping body to the structure.

## Claims

1. A retention clip, comprising:
a clamping body having a first body portion rotatably mounted to a second body portion;
first and second isolation portions attached to a respective first and second body portion, wherein rotation of the first body portion over the second body portion causes the first isolation portion to rotate over the second isolation portion; and
at least a first mounting pin extending from a mounting surface of the second body portion, the mounting pin arranged to be accepted in a first hole in a bracket, wherein the first mounting pin is arranged to be physically altered to fix the clamping body to the bracket.

2. The retention clip of Claim 1, wherein a living hinge integrally connects an exterior surface of the first body portion to an exterior surface of the second body portion, the living hinge allowing rotation of the first body portion over the second body portion.

3. The retention clip of Claim 2, wherein the first and the second body portion and the living hinge are composed of a rigid material.

4. The retention clip of Claim 2 or Claim 3, wherein the first body portion includes a latching member located on the first body portion on a side opposite from the living hinge and the second body portion includes a latching member receiving cavity in alignment with the latching member, wherein upon rotation of the first body member over the second body member the latching member is captured in the latching member receiving cavity retaining the first body member to the second body member.

5. The retention clip of Claim 4, wherein the latching member includes a first tooth and the latching member receiving cavity includes a second tooth, the first tooth engaging the second tooth locking the first member to the second member.

6. The retention clip of Claim 5, wherein the latching member receiving cavity includes a deflecting arm that is arranged to apply a force against the first and the second tooth when they are engaged to resist their release.

7. The retention clip of any one of Claims 2 to 6, wherein first body portion and the second body portion each include arc-shaped surfaces and each first and second isolation portions are attached to a respective first and second body portion arc-shaped surface.

8. The retention clip of Claim 7, wherein the first and second isolation portions are composed of a resilient material arranged to cradle and retain elongated articles between the first and second isolation portions when the first body portion is rotated over the second body portion and each first and second isolation portions include a plurality of ribs extending from a clamping surface, wherein each of the plurality of ribs compresses against the elongated articles.

9. The retention clip of any preceding Claim, wherein the second body portion includes a second mounting pin extending from the mounting surface that is offset axially from the first mounting pin.

10. The retention clip of Claim 9, wherein the bracket includes a receiving portion that includes the first and a second hole the second hole offset axially from the first hole and each of the first and second holes arranged to accept a respective first and second mounting pin therethrough, wherein each first and second mounting pin is physically altered to fix the clamping body to the bracket.

11. The retention clip of Claim 10, wherein the bracket further includes a mounting portion having a mounting hole arranged to accept a fastening device therethrough and attach the bracket with the clamping body to a structure.

12. The retention clip of Claim 10, wherein the first and second mounting pins are physically altered by applying heat from a heat source to the first and the second pins to soften the material comprising the first and second pins and forming a domed cap from the softened material of the first and second pin against the bracket using a tool.

13. The retention clip of Claim 11, wherein the mounting portion is joined to the receiving portion at an angular orientation to the mounting portion.

14. The retention clip of Claim 11, wherein the mounting portion is joined to the receiving portion at an axial orientation to the mounting portion.
